# EUROPEAN PATENT APPLICATION

(11) **EP 4 227 339 A1**
(43) Date of publication of application: **16.08.2023**
(21) Application number: 22156702.7
(22) Date of filing: 15.02.2022
(51) Int. Cl.: C08G 18/40, C08G 18/66, C08G 18/48, C08G 18/50, C08K 5/06, C08L 75/04

(54) **POLYOL COMPOSITION**

(71) Applicant: Covestro Deutschland AG, 51373 Leverkusen (DE)
(72) Inventor: Wei, Yefen, Pudong District, Shanghai, 201315 (CN); Schornstein, Marcel, 41462 Neuss (DE); Lu, Hua, Minhang District, Shanghai, 201199 (CN); Wei, Wenping, Huangpu District, Shanghai, 200025 (CN)
(74) Representative: Levpat

(57) **Abstract**

The invention relates to a polyol composition, a corresponding polyurethane reaction system and a polyurethane foam prepared therefrom.

## Description

### Technical field

The invention relates to a polyol composition, a corresponding polyurethane reaction system and a polyurethane foam prepared therefrom.

### Prior Art

At present, various industries have higher requirements for the volatilization, the odor and the physical properties of hazardous substances in polyurethane foams. Although some solutions can reduce aldehyde volatilization, they cannot realize the process performance of foams at the same time.

CN10775419CN discloses a polyurethane composition containing an aldehyde scavenger, a polyurethane product, and a method for manufacturing a polyurethane foam. Scavenger compounds can reduce (if not eliminate) the release of aldehydes in polyurethane foams.

CN104321360B discloses a polyurethane foam having reduced aldehyde emissions, a method for preparing the polyurethane foam, and a method for reducing aldehyde emissions in foams.

WO2021179240A1 discloses a polyurethane foam made by curing a reaction mixture that contains an aromatic polyisocyanate, at least one isocyanate-reactive material having an average functionality of at least 2 and an equivalent weight of at least 200 per isocyanate-reactive group, at least one foaming agent, at least one surfactant and at least one catalyst, a β-diketone compound and a watersoluble amino-functional polymer.

Despite the above disclosures, the market still urgently needs optimized polyol compositions.

### Summary of the invention

One aspect of the present invention provides a polyol composition comprising:
B1) an EO- and/or PO-based polyether polyol having a functionality of 2-6, preferably 2-4, and a weight-average molecular weight of 3000-12000 g/mol (test method referring to GBT 21863-2008), preferably 4000-8000 g/mol;
B2) a PO- and/or EO-terminated polyurea polyol having a functionality of 2-4, preferably 2.5-3.5, and a weight-average molecular weight of 3000-8000 g/mol (test method referring to GBT 21863-2008), preferably 4000-6000 g/mol;
optionally B3) a polyester polyol having a functionality of 2-4, preferably 2.5-3.5, and a weight-average molecular weight of 1000-1800 g/mol (test method referring to GBT 21863-2008), preferably 1200-1600 g/mol;
B4) at least one β-dicarbonyl compound, preferably a 1,3-dicarbonyl compound.

Preferably, said B4) β-dicarbonyl compound is selected from nonane-4,6-dione, hexane-2,4-dione, 5-methylhexane-2,4-dione, acetylacetone, 1-phenyl-1,3-butanedione, acetoacetamide, 3,3-dimethylpentane-2,4-dione or mixtures thereof, preferably acetoacetamide, acetylacetone, hexane-2,4-dione and mixtures thereof.

Preferably, the content of B1) is 50-80% by weight, preferably 50-74% by weight, based on the total weight of the polyol composition.

Preferably, the content of B2) is 5-50% by weight, preferably 10-40% by weight, more preferably 10-30% by weight, based on the total weight of the polyol composition.

Preferably, the content of B3) is 0-15% by weight, preferably 1-15% by weight, more preferably 1-10% by weight, based on the total weight of the polyol composition.

Preferably, the content of B4) is 0.03-5% by weight, preferably 0.05-3% by weight, more preferably 0.05-0.38% by weight, particularly preferably 0.05-0.28% by weight, based on the total weight of the polyol composition.

Particularly preferred is a polyol composition wherein the content of B1) is 50-80% by weight, preferably 50-74% by weight, based on the total weight of the polyol composition, and wherein the content of B2) is 5-50% by weight, preferably 10-40% by weight, more preferably 10-30% by weight, based on the total weight of the polyol composition, and wherein the content of B3) is 0-15% by weight, preferably 1-15% by weight, more preferably 1-10% by weight, based on the total weight of the polyol composition, and wherein the content of B4) is 0.03-5% by weight, preferably 0.05-3% by weight, more preferably 0.05-0.38% by weight, particularly preferably 0.05-0.28% by weight, based on the total weight of the polyol composition.

Preferably, the polyol composition further comprises B5) a polymeric polyol having a functionality of 2-5, preferably 2-4, and a weight-average molecular weight of 6000-10000 g/mol (test method referring to GBT 21863-2008), preferably 7500-9500 g/mol.

Preferably, the polyol composition further includes B6) at least one surfactant, the content of which is 0-3% by weight, preferably 0.1-1.5% by weight, based on the total weight of the polyol composition.

Preferably, the polyol composition further includes B7) at least one foaming agent.

Preferably, the foaming agent is selected from water, the content of which may be 0.3-8% by weight, preferably 0.5-5% by weight, based on the total weight of the polyol composition.

Preferably, the polyol composition further includes B8) at least one catalyst, the content of which may be 0.2-5% by weight, preferably 0.3-2.5% by weight, based on the total weight of the polyol composition.

Preferably, the polyol composition further includes B9) at least one crosslinking agent, the content of which may be 0.1-4.0% by weight, preferably 0.1-2.0% by weight, based on the total weight of the polyol composition.

Preferably, the polyol composition further includes B10) at least one cell opener, the content of which may be 0.1-4.0% by weight, preferably 0.1-2.0% by weight, based on the total weight of the polyol composition.

Preferably, a polyurethane foam prepared from the polyol composition comprising B2) and B4) has a tensile strength increased by ≥1%, preferably ≥2% (test method DIN-53455), compared with that prepared from the same polyol composition but without B2) and B4).

Preferably, a polyurethane foam prepared from the polyol composition comprising B2) and B4) has an odor value reduced by ≥3%, preferably ≥6% (test method VDA270), compared with that prepared from the same polyol composition but without B2) and B4).

Preferably, a polyurethane foam prepared from the polyol composition comprising B2) and B4) has a formaldehyde emission reduced by ≥30%, preferably ≥50% (test method: micro-scale chamber ISO12219-3), compared with that prepared from the same polyol composition but without B2) and B4).

Preferably, a polyurethane foam prepared from the polyol composition comprising B2) and B4) has an acetaldehyde emission reduced by ≥10%, preferably ≥20% (test method: micro-scale chamber ISO12219-3), compared with that prepared from the same polyol composition but without B2) and B4).

Another aspect of the present invention provides a polyurethane reaction system, comprising:
component A, polyisocyanate;
component B, comprising the aforementioned polyol composition of the present invention.

In an embodiment, the component A comprises:
A1) 0-10% by weight, preferably 0.1-8% by weight of 2,2'-diphenylmethane diisocyanate, based on the total weight of component A,
A2) 10-30% by weight, preferably 15-25% by weight of 2,4'-diphenylmethane diisocyanate, based on the total weight of component A; and
A3) 25-75% by weight, preferably 35-55% by weight of 4,4'-diphenylmethane diisocyanate, based on the total weight of component A.

Preferably, a polyurethane foam prepared from the polyurethane reaction system comprising B2) and B4) has a tensile strength increased by ≥1%, preferably ≥2% (test method DIN-53455), compared with that prepared from the same polyurethane reaction system but without B2) and B4).

Preferably, a polyurethane foam prepared from the polyurethane reaction system comprising B2) and B4) has a formaldehyde emission reduced by ≥30%, preferably ≥50% (test method: micro-scale chamber ISO12219-3), compared with that prepared from the same polyurethane reaction system but without B2) and B4).

Preferably, a polyurethane foam prepared from the polyurethane reaction system comprising B2) and B4) has an acetaldehyde emission reduced by ≥10%, preferably ≥20% (test method: micro-scale chamber ISO12219-3), compared with that prepared from the same polyurethane reaction system but without B2) and B4).

Another aspect of the present invention provides a polyurethane foam prepared by the reaction of the aforementioned polyurethane reaction system of the present invention.

Preferably, the polyurethane foam has >50% by volume of open cells (measured according to DIN ISO 4590-86).

Preferably, the polyurethane foam has a tensile strength of ≥ 220kPa, preferably ≥ 223kPa (test method DIN-53455).

Preferably, the polyurethane foam has a tear strength of ≥ 772 N/m, preferably ≥ 780 N/m (test method ISO34-1).

Preferably, the polyurethane foam has a one-week odor value of <3.3, preferably <3.2 (test method VDA270).

Preferably, the polyurethane foam prepared from the polyol composition comprising B2) and B4) has an odor value reduced by ≥3%, preferably ≥6% (test method VDA270), compared with that prepared from the same polyol composition but without B2) and B4).

Another aspect of the present invention provides a method for preparing a polyurethane foam, including preparing the polyurethane foam by reacting the aforementioned polyurethane reaction system of the present invention.

Another aspect of the present invention provides a polyurethane composite board comprising at least one surface layer and the polyurethane foam of the present invention.

Preferably, the at least one surface layer is of a material selected from polyolefins, polyvinyl chloride, ABS, thermoplastic elastomers, felts and leathers.

Another aspect of the present invention provides a method for preparing the polyurethane composite board of the present invention, including the following steps:
placing a prepared surface layer on an inner surface of a mold, which is optionally sprayed with a mold release agent on an inner surface of the mold,
mixing the polyol composition according to the invention and the isocyanate by hand or machine, and then
injecting the mixture into the mold, opening the mold after reaching an appropriate demolding time to obtain the polyurethane composite board.

Another aspect of the present invention provides a polyurethane product comprising the aforementioned polyurethane foam of the present invention.

Preferably, the polyurethane product is selected from automobile decorations, more preferably automobile door panels, armrests, seats, carpets, dashboards, and steering wheels.

We discovered unexpectedly that the polyol composition of the present invention comprising components B2) and B4) and other components compatible with them can not only be stored stably (especially compared with other polyol compositions containing aldehyde-reducing components), but also prepare polyurethane foams with uniform open cells, low density and higher stability, and meanwhile with ideal and satisfactory low odor. Moreover, the aldehyde (formaldehyde and acetaldehyde, especially formaldehyde) emissions thereof have also been greatly reduced.

### Embodiments

Various aspects of the present invention will now be described in detail.

### Polyols

The polyols in the present invention are preferably a variety of polyether polyols and/or mixtures thereof.

The polyether polyols can be prepared by known processes. Usually, they are prepared by mixing ethylene oxide or propylene oxide with ethylene glycol, 1,2-propanediol, 1,3-propanediol, diethylene glycol, glycerol, trimethylolpropane, pentaerythritol, triethanolamine, toluene diamine, sorbitol and sucrose in the presence of glycerol or propylene glycol as a starter.

In addition, the polyether polyols can also be prepared by mixing at least one olefin oxide containing alkylene having 2-4 carbon atoms with a compound having 2 to 8, preferably but not limited to 3-8 active hydrogen atoms, or other reactive compounds in the presence of a catalyst.

Examples of the catalyst are alkali metal hydroxides such as sodium hydroxide, potassium hydroxide, or alkali metal alkoxides, such as sodium methoxide, sodium ethoxide or potassium ethoxide or potassium isopropoxide.

Usable olefin oxides include but are not limited to, tetrahydrofuran, ethylene oxide, 1,2-propylene oxide, 1,2-butylene oxide, 2,3-butylene oxide, styrene oxide, and any mixtures thereof.

Usable compounds containing active hydrogen atoms include polyhydroxy compounds, including but not limited to, water, ethylene glycol, 1,2-propanediol, 1,3-propanediol, diethylene glycol, trimethylolpropane, and any mixtures thereof, more preferably polyhydric, especially trihydric or multihydric alcohols, such as glycerol, trimethylolpropane, pentaerythritol, sorbitol and sucrose. Usable compounds containing active hydrogen atoms also include, preferably but are not limited to, organic dicarboxylic acids such as succinic acid, adipic acid, phthalic acid and terephthalic acid, or aromatically or aliphatically substituted diamines such as ethylene diamine, diethylene triamine, triethylene tetramine, propylene diamine, butane diamine, hexamethylene diamine or toluene diamine.

Those skilled in the art know the methods for preparing "alkylene oxide compounds", which can be obtained, for example, by oxidation reaction of olefin compounds.

Examples of alkylene oxide compounds that can be used in the present invention include, but are not limited to, ethylene oxide, 1,2-propylene oxide, 1,2-butylene oxide, 2,3-butylene oxide, styrene oxide or a mixture thereof, particularly preferably a mixture of ethylene oxide and 1,2-propylene oxide.

When used in the present invention, the term "alkylene oxide compound" also includes oxacycloalkanes, examples of which include, but are not limited to, tetrahydrofuran and oxetane.

When used in the present invention, the "amine" refers to a compound containing a primary amino group, a secondary amino group, a tertiary amino group, or a combination thereof. Examples of compounds that can be used as the amine of the present invention include, but are not limited to, triethanolamine, ethylenediamine, toluene diamine, diethylenetriamine, triethylenetetramine and derivatives thereof, preferably ethylenediamine, toluene diamine, particularly preferably toluene diamine.

Polyurea polyols, also known as polyhydrazinedicarboxamide polyols, belong to a modified polyether polyol firstly developed by Covestro (formerly known as Bayer Materials). As early as the 1980s, polyurea polyols began to play a role in the chemical industry, mainly for molded products. For the purposes of this application, a polyurea polyol is a polyurea filled polyol, specifically a reactive polyurea dispersion in a polyether polyol. In addition to the characteristics of ordinary filled polyether polyols, they have many other advantages. For example, the foam plastics can pass the combustion test without flame retardants, can improve the load bearing capacity of the foams, and helps opening cells when the foams rise to the highest level, and reduce the closed cell content, etc. The polyurea polyols useful in the present invention comprise preferably a white or beige liquid of relatively high viscosity containing a polyurea dispersion.

Typically, polyurea polyols are prepared by in situ polymerization of an isocyanate mixture with an amine group-containing compound such as a diamine and/or a hydrazine in a basic polyol. Preferred basic polyols include polyether polyols and polyoxyalkylene polyols. Methods for preparing polyurea polyols can be found in American patents US 4089835A and US 4260530A, the entire contents of which are incorporated herein by reference.

At present, there are two technical methods for preparing polyurea polyols known to those skilled in the art. One is the batch production method, and the other is the continuous production method. The batch production method includes gradually dropping the isocyanate at a slow speed into the mixed system of a polyol and a polyamine under rapid stirring to obtain polyurea polyol. The continuous production method includes simultaneously pumping the polyamine, the polyol and the isocyanate at different speeds into a mixing chamber through special equipment, and mixing instantly by high-speed stirring, and carrying out rapid reaction to obtain the polyurea polyol.

In the preparation of polyurea polyols, the amine group-containing compound suitable for polymerizing with the isocyanate mixture is preferably selected from polyamines, hydrazines, hydrazides, ammonia and mixtures of ammonia and/or urea and formaldehyde.

Suitable polyamines include divalent and/or higher-valent primary and/or secondary aliphatic amines, araliphatic amines, cycloaliphatic amines and aromatic amines, such as ethylenediamine; 1,2-propanediamine and 1,3-propanediamine; tetramethylenediamine; hexamethylenediamine; dodecanediamine; trimethyldiaminohexane; N,N'-dimethylethylenediamine; 2,2'-bisaminopropyl methylamine; higher-valent homologues of ethylenediamine, such as diethylenetriamine, triethylenetetramine and tetraethylenepentamine; propylenediamine homologues, such as dipropylenetriamine, piperazine, N,N'-bisaminoethyl-piperazine, triazine, 4-aminobenzylamine, 4-aminophenylethylamine, 1-amino-3,3,5-trimethyl-5-aminomethylcyclohexane, 4,4'-diaminodicyclohexylmethane and 4,4'-diaminodicyclohexylpropane, 1,4-diaminocyclohexane, phenylenediamine, naphthalenediamine; condensates of aniline and formaldehyde; toluenediamine; bisaminomethylbenzene and derivatives monoalkylated on one or two nitrogen atoms of the mentioned aromatic amines. The polyamines have generally a molecular weight of 60-10000 g/mol, preferably 60-1000 g/mol, and most preferably 60-200 g/mol.

The hydrazines used can be hydrazine itself or monosubstituted or N,N'-disubstituted hydrazines. Substituents may be C1-C6 alkyl groups, cyclohexyl or phenyl. The hydrazines have generally a molecular weight of 32-200 g/mol. Suitable hydrazides include hydrazides of divalent or higher-valent carboxylic acids including, for example, carbonic acid, oxalic acid, malonic acid, succinic acid, adipic acid, sebacic acid, azelaic acid, maleic acid, fumaric acid, phthalic acid, isophthalic acid and terephthalic acid; esters of a hydrazine monocarboxylic acid and a diol or polyol and phenol, such as ethylene glycol, propane-1,2-diol, butane-1,2-diol, butane-1,3-diol, butane-1,4-diol, hexanediol, diethylene glycol, triethylene glycol, tetraethylene glycol, dipropylene glycol, tripropylene glycol and hydroquinone; and amides of a hydrazine monocarboxylic acid (aminoureas), with a diamine and polyamine described above for example. The hydrazides have generally a molecular weight of 90-10000 g/mol, preferably 90-1000 g/mol, more preferably 90-500 g/mol.

In special cases, a certain proportion of isocyanates or amines, hydrazines and hydrazides with a functionality greater than 2 can also be used, especially together with corresponding monofunctional compounds.

The β-dicarbonyl compounds of the present invention refer to any compound in which two carbonyl groups in the molecule are separated by one saturated carbon atom. These two carbonyl groups can be carbonyl groups of ketones, aldehydes, or carbonyl groups of carboxylic acids or esters. They can be carbonyl groups in positions 1, 3 in the IUPAC nomenclature, or two carbonyl groups (C=O) in a larger molecule that are not in positions 1, 3 as defined in the IUPAC nomenclature, but are still separated by a carbon atom. Specifically, β-dicarbonyl compounds may include β-diketones, such as CH₃COCH_{z}COCH₃; β-keto acids and esters, such as CH₃COCH₂(CO)OCH₃; acids and esters thereof, such as C₂H₅O(CO)CH₂(CO)OC₂H₅. They can also be selected from nonane-4,6-dione, hexane-2,4-dione, 5-methylhexane-2,4-dione, acetylacetone, acetoacetamide, 1-phenyl-1,3-butanedione, 3,3-dimethylpentane-2,4-dione or mixtures thereof, preferably acetylacetone, acetoacetamide, hexane-2,4-dione or mixtures thereof, more preferably acetoacetamide.

### Polyisocyanate component

Any organic polyisocyanate can be used to prepare the rigid polyurethane foams of the present invention, including aromatic, aliphatic, and cycloaliphatic polyisocyanates and combinations thereof. The polyisocyanate can be represented by the general formula R(NCO)n, where R represents an aliphatic hydrocarbon group containing 2-18 carbon atoms, an aromatic hydrocarbon group containing 6-15 carbon atoms, and an araliphatic hydrocarbon group containing 8-15 carbon atoms, and n=2-4.

Usable polyisocyanates include but are not limited to, vinyl diisocyanate, tetramethylene 1,4-diisocyanate, hexamethylene diisocyanate (HDI), dodecyl 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydrogenated diphenylmethane 2,4-diisocyanate, perhydrogenated diphenylmethane 4,4-diisocyanate, phenylene 1,3-diisocyanate, phenylene 1,4-diisocyanate, stilbene 1,4-diisocyanate, 3,3-dimethyl-4,4-diphenyl diisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), a mixture of diphenylmethane diisocyanate and/or diphenylmethane diisocyanate homologs with more nuclei, polyphenyl polymethylene polyisocyanate (polymeric MDI), naphthylene-1,5-diisocyanate (NDI), their isomers, any mixtures of them and their isomers.

Usable polyisocyanates include also isocyanates modified with carbodiimide, allophanate or isocyanate, preferably, but not limited to, diphenylmethane diisocyanate, carbodiimide-modified diphenylmethane diisocyanate, their isomers, mixtures of them and their isomers.

Optionally, the polyisocyanate may include isocyanate dimers, trimers, tetramers, or combinations thereof.

Preferably, the polyisocyanate component comprises polymeric MDI.

In an embodiment, the polyisocyanate component comprises: A1) 0-10% by weight, preferably 0.1-8% by weight of 2,2'-diphenylmethane diisocyanate, based on the total weight of component A; A2) 0-30% by weight, preferably 10-25% by weight of 2,4'-diphenylmethane diisocyanate, based on the total weight of component A; and A3) 25-75% by weight, preferably 35-55% by weight of 4,4'-diphenylmethane diisocyanate, based on the total weight of component A.

The organic polyisocyanate of the present invention may have an NCO content of 20-33% by weight, preferably 23-32% by weight, particularly preferably 25-32% by weight. The NCO content is measured by GB/T 12009.4-2016.

Organic polyisocyanates can also be used in the form of polyisocyanate prepolymers. These polyisocyanate prepolymers can be obtained by reacting an excess of the aforementioned organic polyisocyanate with a compound having at least two isocyanate-reactive groups at a temperature of, for example, 30-100°C, preferably about 80°C. The polyisocyanate prepolymer of the present invention may have an NCO content of 20-33% by weight, preferably 23-32% by weight. The NCO content is measured by GB/T 12009.4-2016.

The isocyanate content of the present invention may be >10% by weight, preferably >15% by weight, based on the total weight of the polyurethane reaction system.

### Catalyst

The catalysts of the present invention may include tertiary amine catalysts and/or organotin catalysts. The tertiary amine catalyst may include, but is not limited to, one, two or more of triethylamine, tributylamine, dimethylethanolamine, bis(dimethylaminoethyl)ether, triethylenediamine, N-ethylmorpholine, N,N,N',N'-tetramethyl-ethylenediamine, pentamethyldiethylenetriamine, dimethylaminopropylene diamine, N,N,N',N'-tetramethyldipropylenetriamine and weak acid-modified products of the amine catalysts. The content thereof may be 0.5-5.0% by weight, preferably 1.0-3.0% by weight, based on the total weight of component B.

The organotin catalysts include organometallic compounds formed by direct binding of tin and carbon elements. Specifically, they can include the general formula RₙSnX₄₋ₙ (n=1-4, R being an alkyl group or an aryl group, X = halogen, acetate, laurate), and can be divided into two categories, alkyl tin compounds and aryl tin compounds.

Preferably, the catalyst of the present invention has a content of 0.2-5% by weight, 0.3-2.5% by weight, based on the total weight of the polyol composition.

### Foaming agent

The polyol composition of the present invention may further include a foaming agent, preferably water, the content of which may be 0.3-8% by weight, preferably 0.5-5% by weight, based on the total weight of the polyol composition.

### Surfactant

The surfactant selected in the present invention is preferably silicone oil, the content of which may be 0-3% by weight, preferably 0.1-1.5% by weight of silicone oil, based on the total weight of component B.

Surprisingly, we found after repeated experiments that the polyol composition of the present invention comprising specific polyether polyols (such as B2) and B4)) can not only produce polyurethane foams of low density, having specific open cell contents (such as >50% by volume) and higher stability, and can also greatly reduce the aldehyde emissions and the odor value in the polyurethane foams, making them more beneficial to human health and more environmentally friendly.

Unless otherwise specified, all technical and scientific terms used herein have the same meaning as commonly understood by those skilled in the art to which the present invention belongs. When there is a conflict between the definition of a term in this text and the meaning commonly understood by those skilled in the art to which the present invention belongs, the definition described in this text shall prevail.

Unless otherwise stated, all numerical values used herein to express the amount of ingredients, reaction conditions, etc. are understood to be modified by the term "about."

As used herein, "and/or" refers to one or all of the mentioned elements.

As used herein, "including" and "comprising" cover the situations, in which only the mentioned elements exist, and the situations, in which there are other unmentioned elements besides the mentioned elements.

Unless otherwise stated, all percentages in this text are percentages by weight.

The present invention is now described through the examples for illustrative purposes and not for limitation.

### Examples

The types, sources and proportions of raw materials of the present invention are shown in Table 1 below.

Description of test methods:
Functionality refers to the value measured according to the industry formula: functionality = hydroxyl value ^{∗} molecular weight/56100; wherein the molecular weight is determined by GPC high performance liquid chromatography;
Core density refers to the density of the foam center tested when the mold used in the process for preparing polyurethane foam composite panels is overfilled, that is, the core density of molded foams, measured by ASTM D 1622-03;
Other physical properties of molded foams are tested (as follows), including mixing the reaction raw materials of foams in proportion, pouring into the mold after stirring, and taking out the foams after reaching the set curing time and testing the properties thereof:
   Compression hardness test: tested according to DIN53577 standard;
   Tensile strength test: tested according to DIN53571 standard;
   Elongation at break test: tested according to DIN53571 standard;
   Tear strength: tested according to ISO34-1 standard;
   Compression set test: tested according to DIN53572 standard;
   Aldehyde emission tested by micro-scale chamber: tested according to ISO12219-3 standard; Odor: tested according to VDA270 standard.
The types, sources and proportions of raw materials of the present invention are shown in Table 1. 10WF18, PO/EO polyether polyol started with glycerol, purchased from Covestro Germany, hydroxyl value: 28, functionality: 3;
Desmophen 7619W, PO/EO polyurea polyol, purchased from Covestro Germany, hydroxyl value: 38, functionality: 3;
Baycoll AV2113, aliphatic polyester polyol, purchased from Covestro Germany, hydroxyl value: 109, functionality: 2.7;
Hyperlite 1650, copolymer polyether polyol, purchased from Covestro Germany, hydroxyl value: 20, functionality: 3;
Tegostab B8715LF2, silicone-based foam stabilizer, purchased from Evonik Specialty Chemicals (Shanghai) Co., Ltd.;
TEOA, triethanolamine, crosslinking agent, purchased from Dow Chemical Company;
DEOA, diethanolamine, crosslinking agent, purchased from Brenntag;
JEFFCAT ZF-10, polyurethane synthesis catalyst, Huntsman Chemical Trading (Shanghai) Co., Ltd.;
Dabco NE1070, polyurethane synthesis catalyst, purchased from Evonik Specialty Chemicals (Shanghai) Co., Ltd.

### Preparation of polyurethane foams of the present invention

Example 1 and Comparative Example 1:
The polyisocyanate of component A and the constituents of component B were fully mixed according to the specific weight parts listed in Table 1 under stirring and then foamed to obtain the polyurethane foams of the Example and the Comparative Example.

**Table 1 - The proportions of components of Example 1 and Comparative Example 1 (unit: % by weight, based on the total weight of component B)**

| Formulation composition | Comparative Example 1 | Example 1 |
|---|---|---|
| 10WF18 | 75 | 66 |
| Hyperlite 1650 | 18 | |
| Desmophen7619W | | 20 |
| Baycoll AV2113 | 3 | 10 |
| Dabco NE1070 | 0.5 | 0.5 |
| Jeffcat ZF10 | 0.3 | 0.3 |
| B8715LF2 | 0.3 | 0.3 |
| Water | 1.5 | 1.5 |
| DEOA | 0.5 | 0.5 |
| TEOA | 1.0 | 1.0 |
| Acetoacetamide | | 0.2 |
| Desmodur 0418 | 36.0 | 36.0 |

**Table 2 - Test results of Comparative Example 1 and Example 1**

| Formulation | | Comparative Example 1 | Example 1 |
|---|---|---|---|
| Properties | Demolding time, s | 120 | 120 |
| | Compression hardness 40%, kPa | 41 | 42 |
| | Tensile Strength, kPa | 219 | 227 |
| | Elongation at break, % | 50 | 53 |
| | Tear strength, N/m | 771 | 819 |
| | Compression set 50% (22 h, 70° C) | 7.2 | 7.5 |
| Aldehyde emissions (tested by micro-scale chamber) | Formaldehyde, (ng/(g·h)) | 55 | 10 |
| | Acetaldehyde, (ng/(g·h)) | 44 | 26 |
| Odor | VDA270 | 3.3 | 3.0 |

It can be seen from the above experimental results that the polyurethane foam prepared by the reaction of the polyurethane reaction system of Example 1 comprising the polyol components of the present invention not only significantly reduces the aldehyde emissions, but also shows excellent physical properties with surprisingly lowered odor value, compared with that of Comparative Example 1.

In order to further illustrate the problems solved by the present invention and the beneficial effects achieved, the polyol composition (component B) in the polyurethane reaction systems of Example 1 and Example 1 were subjected to the aging test (aging test at 40 °C) respectively, and then reacted with component A. The test results are shown in Table 3.

**Table 3 - Test Results of the aging test of Comparative Example 1 and Example 1**

| Formulation | Comparative Example 1 | | Example 1 | |
|---|---|---|---|---|
| Component B Aging time at 40°C, days | 0 | 14 | 0 | 14 |
| Start time, seconds | 17 | 18 | 17 | 18 |
| Rising time, seconds | 77 | 78 | 80 | 82 |
| Free foam density, kg/m³ | 96 | 97 | 94 | 95 |

It can be seen from the test results in Table 3 that the polyol composition of the present invention can not only significantly reduce the aldehyde emissions and the odor of the polyurethane foams prepared therefrom, improve or maintain the physical properties, but also can store stably without being affected by transportation and storage.

Although the present invention has been described in detail above as regards the purpose of the present invention, it should be understood that this detailed description is only exemplary. In addition to the content that may be defined by the claims, the present invention may be implemented in other special forms without departing from the spirit or main characteristics of the present invention.

## Claims

1. A polyol composition comprising:
B1) an EO- and/or PO-based polyether polyol having a functionality of 2-6, preferably 2-4, and a weight-average molecular weight of 3000-12000 g/mol (test method referring to GBT 21863-2008), preferably 4000-8000 g/mol;
B2) a PO- and/or EO-terminated polyurea polyol having a functionality of 2-4, and a weight-average molecular weight of 3000-8000 g/mol (test method referring to GBT 21863-2008), preferably 4000-6000 g/mol;
optionally B3) a polyester polyol having a functionality of 2-4, and a weight-average molecular weight of 1000-1800 g/mol (test method referring to GBT 21863-2008), preferably 1200-1600 g/mol;
B4) at least one β-dicarbonyl compound, preferably a 1,3-dicarbonyl compound.

2. The polyol composition according to claim 1, wherein
the content of B1) is 50-80% by weight, preferably 50-74% by weight, based on the total weight of the polyol composition; and/or
the content of B2) is 5-50% by weight, preferably 10-40% by weight, more preferably 10-30% by weight, based on the total weight of the polyol composition; and/or
the content of B3) is 0-15% by weight, preferably 1-15% by weight, more preferably 1-10% by weight, based on the total weight of the polyol composition; and/or
the content of B4) is 0.03-5% by weight, preferably 0.05-3% by weight, more preferably 0.05-0.38% by weight, particularly preferably 0.05-0.28% by weight, based on the total weight of the polyol composition.

3. The polyol composition according to claim 1 or 2, wherein B4) β-dicarbonyl compound is selected from nonane-4,6-dione, hexane-2,4-dione, 5-methylhexane-2,4-dione, acetylacetone, 1-phenyl-1,3-butanedione, acetoacetamide, 3,3-dimethylpentane-2,4-dione or mixtures thereof, preferably acetoacetamide, acetylacetone, hexane-2,4-dione and mixtures thereof.

4. The polyol composition according to any one of claims 1-3, wherein the polyol composition further comprises B5) a polymeric polyol having a functionality of 2-5, preferably 2-4, and a weight-average molecular weight of 6000-10000 g/mol (test method referring to GBT 21863-2008), preferably 7500-9500 g/mol.

5. The polyol composition according to any one of claims 1-4, wherein a polyurethane foam prepared from the polyol composition comprising B2) and B4) has a tear strength increased by ≥1%, preferably ≥3% (test method ISO34-1), compared with that prepared from the same polyol composition but without B2) and B4).

6. The polyol composition according to any one of claims 1-5, wherein a polyurethane foam prepared from the polyol composition comprising B2) and B4) has an odor value reduced by ≥3%, preferably ≥6% (test method VDA270), compared with that prepared from the same polyol composition but without B2) and B4).

7. The polyol composition according to any one of claims 1-6, wherein a polyurethane foam prepared from the polyol composition comprising B2) and B4) has a formaldehyde emission reduced by ≥30%, preferably ≥50% (test method ISO12219-3), compared with that prepared from the same polyol composition but without B2) and B4).

8. The polyol composition according to any one of claims 1-7, wherein a polyurethane foam prepared from the polyol composition comprising B2) and B4) has an acetaldehyde emission reduced by ≥10%, preferably ≥20% (test method ISO12219-3), compared with that prepared from the same polyol composition but without B2) and B4).

9. A polyurethane reaction system, comprising:
component A, polyisocyanate;
component B, comprising the polyol composition according to any one of claims 1-8.

10. The polyurethane reaction system according to claim 9, wherein a polyurethane foam prepared from the polyurethane reaction system comprising B2) and B4) has a tensile strength increased by ≥1%, preferably ≥2% (test method DIN-53455), compared with that prepared from the same polyurethane reaction system but without B2) and B4).

11. A polyurethane foam prepared by the reaction of the polyurethane reaction system according to claim 9 or 10.

12. The polyurethane foam according to claim 11, wherein the polyurethane foam has a one-week odor value of <3.3, preferably <3.2 (test method VDA270).

13. A polyurethane composite board comprising at least one surface layer and the polyurethane foam according to any one of claims 11 or 12.

14. A polyurethane product comprising the polyurethane foam according to any one of claims 11 or 12.

15. The polyurethane product according to claim 14, wherein the polyurethane product is selected from automobile decorations, preferably automobile door panels, armrests, seats, carpets, dashboards, and steering wheels.
